# FASCICULE DE BREVET EUROPEEN

(11) **EP 1 227 393 B1**
(45) Date de publication et mention de la délivrance du brevet: **08.03.2006**
(21) Numéro de dépôt: 02075227.5
(22) Date de dépôt: 21.01.2002
(51) Int. Cl.: G06F 9/44, G06F 13/10

(54) **Procédé de programmation d'une application d'automatisme**
Verfahren zur Programmierung einer Automatisierungsapplikation
Method of programming an automation application

(30) Priorité: 26.01.2001 FR 0101122
(43) Date de publication de la demande: 31.07.2002
(73) Titulaire: Schneider Automation, 06560 Valbonne (FR)
(72) Inventeur: Beck, Francois, 06740 Chateauneuf de Grasse (FR); Baraston, Henry, 06200 Nice (FR); Laurain, Christian, 06330 Roquefort Les Pins (FR)
(74) Mandataire: Carias, Alain

(56) Documents cités:
- EP-A- 0 752 646
- HERTER T ET AL: "EINE SPRACHE ZUR GENERIERUNG VON GERATETREIBERN" ANGEWANDTE INFORMATIK. APPLIED INFORMATICS, VIEWEG UND SOHN VERLAG GMBH. BRAUNSCHWEIG, DE, vol. 29, no. 8/9, 1 septembre 1987 (1987-09-01), pages 369-378, XP000026881 ISSN: 0013-5704
- "DEVICE-INDEPENDENT SUPPORT IN COMMUNICATION ENVIRONMENTS" IBM TECHNICAL DISCLOSURE BULLETIN, IBM CORP. NEW YORK, US, vol. 33, no. 2, 1 juillet 1990 (1990-07-01), pages 99-100, XP000123548 ISSN: 0018-8689

## Description

La présente invention concerne un procédé de programmation d'une application d'automatisme sur une station de programmation d'un équipement d'automatisme. Elle concerne également une telle station de programmation.

Par station de programmation, il faut comprendre un équipement informatique, notamment de type PC, relié ou non à l'équipement d'automatisme à programmer, et comportant une unité centrale et un programme communément appelé atelier de programmation avec lesquels interagit un utilisateur pour concevoir et générer un programme d'application d'automatisme destiné à être exécuté sur un ou plusieurs équipements d'automatisme.

Un équipement d'automatisme désigne ci-après un automate programmable, une commande numérique ou tout équipement pouvant contenir et exécuter un programme d'application contrôlant une application d'automatisme, cette application d'automatisme appartenant par exemple au domaine des automatismes industriels, des automatismes du bâtiment ou du contrôle/commande des réseaux électriques de distribution.

Un tel équipement d'automatisme est composé d'une unité centrale (UC) et d'au moins un coupleur d'entrées-sorties connectés à des capteurs et à des préactionneurs de l'application d'automatisme à commander. L'unité centrale comprend un (ou des) processeur(s), une mémoire morte, en général non modifiable (type ROM) ou modifiable de type EEPROM, contenant le programme constructeur appelé encore système d'exploitation (operating system) exprimé dans un langage spécifique au constructeur, une mémoire vive, un gestionnaire des entrées-sorties, qui communiquent entre eux par un bus. La mémoire vive ou encore appelée volatile (RAM) contient, dans une première zone, le programme utilisateur et dans une deuxième zone, les données, en particulier les images des états des coupleurs et les constantes relatives au programme utilisateur.

Le programme utilisateur, appelé encore programme d'application, est chargé de faire du contrôle ou de la commande d'une application d'automatisme au moyen d'entrées-sorties pilotées par ce programme d'application. Il est élaboré par le concepteur et est écrit dans un ou plusieurs langages graphiques d'automatisme intégrant, notamment, des schémas à contacts (Ladder Diagram), des diagrammes fonctionnels en séquence (Sequential Function Chart), encore dénommés Grafcet, des descriptions de blocs fonctions (Function Block Description) ou des listes d'instructions (Instruction List), comme indiqué notamment dans le document WO95/23374. Ces langages d'automatisme sont préférentiellement conformes à la norme IEC1131-3, de façon à faciliter la programmation par un concepteur automaticien ne maîtrisant pas forcément les langages informatiques. Ces langages sont utilisables, soit sur une station de programmation, soit sur un équipement d'automatisme.

A ce jour, la méthode de programmation d'un programme d'application développé sur une station de programmation en utilisant un ou plusieurs des langages disponibles, notamment graphiques, et en définissant les variables associées à l'automatisme, comprend en premier lieu une étape dite de configuration dans laquelle le concepteur détermine avec exactitude l'adresse topologique complète de chaque voie et objet d'entrées-sorties utilisés dans le programme d'application. Cette opération longue et fastidieuse oblige le concepteur, premièrement à manipuler à la fois la documentation technique des différents modules d'entrées-sorties de l'équipement d'automatisme supportant les différentes voies, deuxièmement à connaître la position de chaque module dans le ou les paniers (racks) de l'équipement d'automatisme et troisièmement à manipuler dans le programme d'application la syntaxe topologique directe des variables associées aux voies d'entrées-sorties de l'équipement d'automatisme.

Cette méthode de programmation présente également l'inconvénient d'être totalement dépendante de l'implantation matérielle des modules. Ainsi, comme la station de programmation ne sait pas manipuler des variables symboliques représentant une structure de voie d'entrées-sorties, lorsque pour un même type d'équipement d'automatisme, la même application d'automatisme doit être réalisée mais avec une implantation matérielle des modules d'entrées-sorties totalement différente, le concepteur du programme d'application devra se livrer à une nouvelle procédure de configuration pour que la mise en oeuvre du même programme d'application soit adaptée à la nouvelle implantation matérielle.

La présente invention a donc pour objet de pallier les inconvénients de l'art antérieur en proposant un procédé de programmation d'une application d'automatisme permettant de manipuler sous forme symbolique et structurée, les données échangées entre un programme d'application et les voies des modules d'entrées-sorties et par conséquent d'autoriser l'écriture du programme d'application avant une étape de configuration, et indépendamment de l'équipement d'automatisme.

Ce but est atteint par un procédé de programmation d'un programme d'application d'automatisme sur une station de programmation d'un équipement d'automatisme qui comprend :
- une étape de définition d'une pluralité d'objets de type structuré représentant chacun une voie d'entrées-sorties d'un module d'entrées-sorties de l'équipement d'automatisme, la définition de chaque type structuré comprenant au moins un élément caractéristique correspondant à une information d'entrées-sorties échangée entre le module d'entrées-sorties et le programme d'application et pour chaque élément l'adresse topologique relative de l'information d'entrées-sorties,
- une étape d'écriture du programme d'application d'automatisme, en déclarant des variables symboliques d'entrées-sorties du programme d'application comme une instance d'un objet de type structuré préalablement défini,
- une étape de configuration des variables symboliques d'entrées-sorties comprenant une définition de l'emplacement physique de chaque module d'entrées-sorties de l'équipement d'automatisme associé aux variables symboliques d'entrées-sorties du programme d'application,
- une étape d'interprétation automatique du programme d'application en vue de son exécution sur l'équipement d'automatisme, comprenant une étape de remplacement, dans le programme d'application, des variables symboliques d'entrées-sorties par l'adresse topologique complète de l'information d'entrées-sorties correspondante.

Selon une autre particularité, chaque variable symbolique du programme comprend deux champs, un premier champ est constitué d'une chaîne de caractères choisie par le concepteur du programme d'application, permettant de mettre en correspondance un objet de type structuré avec la variable symbolique, un deuxième champ est constitué d'une identification d'un élément de l'objet de type structuré associé à la variable symbolique.

Selon une autre particularité, l'étape de remplacement comprend :
- une étape de recherche de l'adresse relative définie pour chaque élément du type structuré dans un tableau des éléments d'un objet de type structuré mémorisé sur la station de programmation,
- une étape de recherche, dans un tableau de configuration, de l'emplacement physique déclaré pour chaque module associé par le concepteur aux variables symboliques d'entrées-sorties du programme d'application,
- une étape de construction, par des moyens d'interprétation de la station de programmation, à partir de l'adresse relative et de l'emplacement physique trouvés, de l'adresse topologique exacte de chaque variable symbolique du programme d'application.

Selon une autre particularité, l'étape de définition des objets de type structuré comprend pour chaque objet de type structuré une étape de création puis de mémorisation sur des moyens de mémorisation portatifs, d'un tableau des éléments de l'objet de type structuré comprenant une première colonne contenant au moins une identification d'une donnée caractéristique de l'objet de type structuré, une deuxième colonne comprenant le type élémentaire de la donnée (EDT), une troisième colonne comprenant l'adresse relative de la donnée.

Selon une autre particularité, le tableau des éléments de l'objet de type structuré comprend une quatrième colonne comprenant une description de la donnée, une cinquième colonne comprenant les droits en lecture ou en écriture existants sur chaque donnée.

Selon une autre particularité, le procédé comprend une étape de configuration des modules d'entrées-sorties comprenant une étape de sélection d'une référence commerciale d'un module d'entrées-sorties, ainsi que l'affectation du module d'entrées-sorties sélectionné à un emplacement physique déterminé, l'étape d'interprétation comprenant alors une étape de contrôle pour vérifier que le module d'entrées-sorties sélectionné à un emplacement physique déterminé est compatible avec l'objet de type structuré configuré au même emplacement physique.

Un deuxième but de l'invention est de proposer une station de programmation d'une application d'automatisme sur un équipement d'automatisme permettant de manipuler sous forme symbolique et structurée, les données échangées entre un programme d'application et les voies des modules d'entrées-sorties et par conséquent d'autoriser l'écriture du programme d'application avant une étape de configuration, et indépendamment de l'équipement d'automatisme.

Ce deuxième but est atteint par une station de programmation d'un équipement d'automatisme comprenant des moyens de mémorisation, des moyens d'affichage et des moyens d'interaction avec un concepteur d'un programme d'application, caractérisée en ce que la station de programmation comprend un éditeur de variable symbolique pour générer un tableau de configuration mémorisé sur les moyens de mémorisation, la station de programmation comprend également une pluralité de tableaux des éléments d'objets de type structuré mémorisés sur les moyens de mémorisation, ainsi que des moyens d'interprétation d'un programme d'application comprenant au moins une variable symbolique définie par le concepteur, par l'intermédiaire de l'éditeur.

Selon une autre particularité, la station de programmation comprend des moyens de compilation du programme d'application interprété par les moyens d'interprétation pour transformer le programme d'application interprété en application d'automatisme exécutable sur un équipement d'automatisme, la station de programmation comprenant des moyens de transferts de l'application d'automatisme exécutable soit sur des moyens de mémorisation portables compatibles avec l'équipement d'automatisme, soit directement sur des moyens de mémorisation de l'équipement d'automatisme.

L'invention, avec ses caractéristiques et avantages, ressortira plus clairement à la lecture de la description faite en référence aux dessins annexés dans lesquels :
- la figure 1 représente un schéma de fonctionnement du procédé selon l'invention,
- la figure 2 représente un diagramme de fonctionnement du procédé selon l'invention,
- la figure 3 représente un exemple d'une interface graphique d'un éditeur de variable.

Comme expliqué précédemment le principe de l'invention consiste à permettre une programmation, c'est-à-dire l'écriture du programme d'application (10) contrôlant une application d'automatisme, sans connaître la syntaxe topologique directe et complète de chaque variable d'entrées-sorties utilisée dans le programme d'application (10). Pour atteindre ce but le procédé selon l'invention fournit, au concepteur du programme d'application d'automatisme, un certain nombre d'outils. Ces outils vont permettre au concepteur d'utiliser dans la syntaxe du programme d'application contrôlant l'application automatisme, des objets ou variables symboliques et structurées, représentant les données échangées entre les différentes voies des différents modules d'entrées-sorties mis en oeuvre dans l'application d'automatisme et le programme d'application (10).

Le programme d'application d'un équipement d'automatisme est décomposé en tâches. Une tâche est un ensemble d'instructions exécutées périodiquement par le processeur de l'unité centrale de l'équipement d'automatisme. Le programme constructeur active le gestionnaire d'entrées-sorties avant l'exécution d'une tâche pour faire l'acquisition des informations provenant d'une voie logique. A la fin de la tâche, le programme constructeur active le gestionnaire d'entrées-sorties pour qu'il envoie des informations à la voie logique.

Une structure de données d'un équipement d'automatisme est associée à chaque voie logique d'un coupleur donné que nous appellerons interface langage. La structure de données dépend du coupleur et de la voie logique. La taille et son contenu dépendent de la fonction métier à réaliser. Elle est stockée dans une zone de la mémoire coupleur, le contenu de cette mémoire étant échangé (reçu ou envoyé) sur ou vers une zone mémoire identique dans la mémoire de l'unité centrale de l'équipement d'automatisme.

La structure de données est structurée par type d'échanges :
- échange périodique d'entrée : le contenu est envoyé de la mémoire coupleur à la mémoire de l'unité centrale , cette zone mémoire contient en général des informations produites périodiquement, par exemple la valeur numérique d'un capteur ;
- échange périodique de sortie : le contenu est reçu depuis la mémoire de l'unité centrale, cette zone mémoire contient en général des informations communiquées périodiquement par le programme utilisateur ;
- échange à la demande du programme utilisateur : cette zone a des parties dont le contenu est reçu depuis la mémoire de l'unité centrale et des parties dont le contenu est envoyé vers la mémoire de l'unité centrale, cette zone mémoire contient des informations traitées « apériodiquement » par le programme utilisateur ;
- échange de configuration à la mise en route du programme utilisateur: cette zone est reçue de la mémoire de l'unité centrale, cette zone mémoire contient des informations définies par l'utilisateur pour démarrer la fonction métier.

Les zones sont respectivement codées I, Q, M, K.

Le programme utilisateur accède aux informations stockées dans les zones ci-après de la mémoire de l'unité centrale sous la forme de la structure de données par la syntaxe définie ci-dessus.

Si l'on considère une voie logique, 0 ou 1 par exemple, la zone I contient les informations qui sont générées par cette voie logique.

La zone Q contient les ordres ou commandes de l'unité centrale qui sont destinées à la voie logique.

La zone M dépend de la fonction métier et peut contenir des informations de type "statut", paramètres de commande spécifique, paramètres de réglage. Ces informations sont échangées sur demande du programme utilisateur.

Les paramètres de statut regroupent les défauts de la voie et éventuellement l'état de fonctionnement de la voie logique.

Les paramètres de commande spécifique sont des commandes qui se distinguent de la zone uniquement parce qu'elles sont envoyées sur demande du programme utilisateur, comme par exemple un ordre de mouvement à une position et une vitesse donnée.

Les paramètres de réglage sont des informations transmises à la voie logique pour décrire des caractéristiques évolutives de la partie opérative. Par exemple, pour un coupleur de commande d'axes, un des paramètres est le gain de position du procédé.

La zone K contient les paramètres de configuration, c'est-à-dire les paramètres des capteurs ou actionneurs travaillant avec le coupleur. Ce sont des invariants pour une partie opérative donnée.

Les différentes zones I, Q, M et K sont à leur tour structurées en sous-zones mémoires définissant le type d'information contenu dans la zone. Ces sous-zones sont les suivantes :
- sous-zone "Bits" codée X ou par défaut (si rien n'est précisé comme type d'objet) : l'information stockée est binaire, comme par exemple déclencher le comptage.
- sous-zone "Mots" codée W : l'information stockée est de type numérique codée sur 16 bits, comme par exemple la valeur numérique d'un capteur de température ;
- sous-zone "Doubles mots" codée D : l'information stockée est de type numérique codée sur 32 bits, comme par exemple la valeur numérique d'un capteur de température.
- sous-zone "Flottants" codée F : l'information stockée est de type réel simple précision codée sur 32 bits (IEC 559), comme par exemple la valeur numérique d'un capteur de température.

Chaque sous-zone contient plusieurs informations ou éléments du même type. Un élément donné est identifié par son « rang » dont la valeur est égale à la position de l'élément par rapport au début de la sous-zone. Chaque élément d'information est donc défini par un type d'information (X, W, D, F) et un rang à l'intérieur de chaque zone.

La syntaxe de l'interface langage est de la forme: %<code de type d'échange><code de type d'information><adresse topologique><.rang>, par exemple %IW0.1.3.2.

L'adresse topologique est définie par l'adresse du coupleur associée au numéro de la voie logique. Les coupleurs montés dans le rack principal sont accédés par une adresse égale au numéro de rack (adresse 0) suivi du numéro de coupleur défini sur 1 ou 2 digits. Par exemple l'adresse 0.1.0 est la voie logique 0 du coupleur situé à l'emplacement 1 du rack principal, ayant par défaut le numéro d'emplacement 0. %ID0.1.0 sera alors la valeur de la voie logique 0 de comptage du compteur sur 32 bits situé à l'emplacement 1 du rack principal.

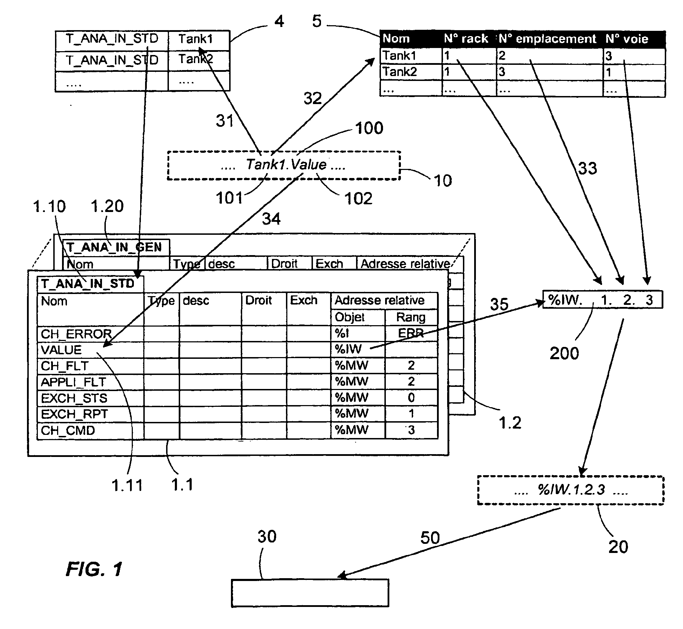

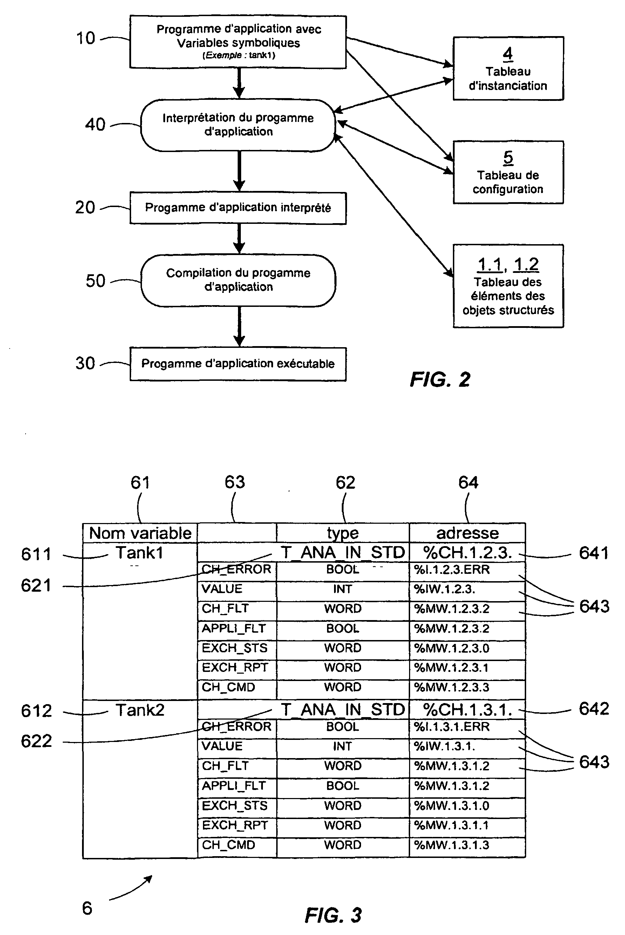

Le procédé selon l'invention va à présent être décrit en référence aux figures 1 et 2.

Le premier outil comprend, par exemple sous forme d'un tableau (1.1, 1.2) mémorisé sur les moyens de mémorisation de la station de programmation, une description symbolique de chaque voie des différents modules d'entrées-sorties. Cette description comprend pour chaque voie d'entrées-sorties, un fichier d'objets d'entrées-sorties de type structuré appelés indifféremment par la suite également objets de type structuré ou IODDT (en anglais: Input/Output Derived Data Type). Chaque fichier d'objets de type structuré est identifié par un nom (1.10, 1.20) constitué par une chaîne, par exemple d'au plus 32 caractères. Chaque objet de type structuré (par exemple, T_ANA_IN_GEN) est défini de façon unique pour constituer un identifiant d'une voie ou d'un module d'entrées-sorties.

A titre d'exemple, on définit pour une entrée analogique d'un module d'entrées-sorties, l'objet de type structuré nommé "T_ANA_IN_STD". Si ce même module d'entrées-sorties comprend, par exemple, une entrée tout ou rien, et diverses sorties, un objet de type structuré différent sera défini pour chaque entrée et un pour chaque sortie du module d'entrées-sorties.

On peut associer à un objet de type structuré un commentaire afin que l'utilisateur du procédé selon l'invention puisse faire la relation entre le type structuré et la sortie ou l'entrée du module ou la voie d'entrées-sorties correspondante.

Selon une variante de réalisation, on adjoint à chaque objet de type structuré, une clé identifiant une famille ou classe à laquelle l'objet de type structuré appartient. Par famille, il faut comprendre un ensemble d'objets de type structuré désignant des modules ou voies d'entrées-sorties réalisant le même type de fonction métier. A titre d'exemple, une première clé (DIS) permet d'identifier les objets de type structuré des modules ou voies d'entrées-sorties tout ou rien ("TOR" ou "DIS" pour discrète). Une deuxième clé (ANA) permet d'identifier les objets de type structuré des modules ou voies d'entrées-sorties réalisant des fonctions analogiques ("ANA"). Une troisième clé (COM) permet d'identifier les objets de type structuré des modules ou voies d'entrées-sorties des fonctions de communication ("COM"). Une quatrième clé (COUNT) permet d'identifier les objets de type structuré des modules ou voies d'entrées-sorties des fonctions de comptage ("COUNT"). Une cinquième clé permet d'identifier les objets de type structuré des modules ou voies d'entrées-sorties des fonctions de mouvement ("AXIS" ou "CSY" ou "STEPPER" ou "INTERPO"). D'autres clés peuvent être définies pour d'autres fonctions métiers, telles que des fonctions de pesage notamment. Grâce à ces clés, les objets de type structuré peuvent être classés dans le tableau par fonction métier, de façon à faciliter leur manipulation par le concepteur de l'application d'automatisme.

Le tableau de famille suivant comprend une liste non exhaustive de différents objets de type structuré regroupés par famille, en donnant dans une première colonne le nom de la famille à laquelle appartient un objet de type structuré IODDT, dans une deuxième colonne, le nom de l'IODDT et dans une troisième colonne une description sommaire de l'IODDT.

| **Famille I/O** | **Nom de l'IODDT** | **Description de l'IODDT** |
|---|---|---|
| TOR | T_DIS_IN_GEN | Entrée tout ou rien générique |
| | T_DIS_IN_STD | Entrée tout ou rien standard |
| | T_DIS_EVT | Entrée événementielle tout ou rien |
| | T_DIS_IN_MOM | Entrée tout ou rien Standard d'un module déterminé "Momentum" |
| | T_DIS_OUT_GEN | Sortie tout ou rien générique |
| | T_DIS_OUT_STD | Sortie tout ou rien standard |
| | T_DIS_OUT_REFLEX | Sortie tout ou rien réflexe |
| | T_DIS_OUT_MOM | Sortie tout ou rien Standard d'un module déterminé "Momentum" |
| Analogique | T_ANA_IN_GEN | Entrée analogique générique |
| | T_ANA_IN_STD | Entrée analogique standard |
| | T_ANA_IN_CTRL | Entrée analogique standard + statut de la mesure |
| | T_ANA_IN_EVT | Entrée analogique rapide + événement |
| | T_ANA_OUT_GEN | Sortie analogique générique |
| | T_ANA_OUT_STD | Sortie analogique standard |
| | T_ANA_IN_MOM8 | Entrée analogique d'un module déterminé "Momentum ANA 4/8 IN" |
| | T_ANA_IN_MOM16 | Entrée analogique d'un module déterminé "Momentum ANA 16 IN" |
| | T_ANA_OUT_MOM_8 | Sortie analogique d'un module déterminé "Momentum ANA 8 OUT" |
| | T_ANA_DIS_IN_OUT_MO M12 | Entrée-sortie analogique d'un module déterminé "Momentum ANA+DIS 4I/2O" |
| Communication | T COM STS GEN | Voie de COM Générique avec statut |
| | T_COM_UTW_M | "Unitelway" Maître |
| | T_COM_UTW_S | "Unitelway" Esclave |
| | T_COM_MB | "Modbus" |
| | T_COM_CHAR | Mode caractère |
| | T_COM_FPW | "Fipway" |
| | T_COM_MBP | "Modbus" Plus |
| | T_COM_JNET | "JNET" |
| | T_COM_ASI | "AS-i" |
| | T_COM_ETY_1X0 | Ethemet 110 et 120 |
| | T_COM_ETY_210 | Ethernet 210 |
| | T_COM_IBS | InterBus |
| Comptage | T_COUNT_ACQ | Compteur en mode acquisition |
| | T_COUNT_HIGH_SPEED | Compteur haute vitesse |
| | T_COUNT_STD | Compteur standard |
| Mouvement | T_AXIS_AUTO | Axe en mode automatique |
| | T_AXIS_STD | Axe standard |
| | T_INTERPO_STD | Interpolation standard |
| | T_STEPPER_STD | Moteur pas à pas |
| | T_CSY_CMD | Module de mouvement avec liaison numérique Sercos (marque déposée) |
| | T_CSY_RING | Anneau Sercos (marque déposée) |
| | T_CSY_IND | Axe indépendant réel imaginaire ou distant |
| | T_CSY_FOLLOW | Axe asservi |
| | T_CSY_COORD | Axe coordonné |
| | T_CSY_CAM | Came |

Chaque objet de type structuré IODDT comprend une structure de données comprenant au moins un élément (1.11) ou attribut caractéristique. L'ensemble des éléments ou attributs d'un objet de type structuré constitue une structure de données pour l'objet de type structuré considéré. Chaque élément ou attribut de l'objet de type structuré correspond à une information d'entrée ou de sortie du module ou de la voie d'entrées-sorties correspondant à l'objet de type structuré auquel appartient l'élément.

Selon un autre aspect de l'invention, il peut exister des relations entre les différents objets IODDT d'une même famille. Ces relations se traduisent par l'héritage des éléments d'un IODDT par un autre IODDT. Il est possible de faire une analogie entre la présente invention et la programmation orientée objet classique dans le domaine de l'informatique. En effet, compte tenu de sa définition et de sa structure un objet de type structuré est assimilable à une classe d'objets en langage orienté objet. De même qu'en langage orienté objet, une sous-classe hérite des attributs et des méthodes d'une ou des classes dont elle dépend, un objet IODDT hérite également des éléments de l'objet IODDT dont il dépend.

A titre d'exemple, l'IODDT T_DIS_IN_GEN correspondant à une entrée tout ou rien standard est un sous-ensemble de l'IODDT T_DIS_IN_STD, correspondant à une entrée tout ou rien générique. Par conséquent, tous les attributs de l'IODDT T_DIS_IN_STD sont hérités de l'IODDT T_DIS_IN_GEN.

Selon l'invention, l'ensemble des éléments d'un objet de type structuré (T_ANA_IN_STD, T_ANA_IN_GEN) déterminé peut être regroupé dans un tableau (1.1 respectivement 1.2) respectif à chaque objet.

Le tableau d'objet N°1 (1.1) ci-dessous contient les éléments de l'objet de type structuré "T_ANA_IN_STD" définis précédemment et correspondant à une entrée analogique standard d'un module d'entrées-sorties.

**Tableau N°1 :**

| **Nom** | **Type** | **Commentaire/description** | **Droit** | **Exch** | **Adresse relative** | |
|---|---|---|---|---|---|---|
| | | | | | Objet | Rang |
| CH_ERROR | BOOL | Erreur de voie | R | IMP | %I | ERR |
| VALUE | INT | Valeur de la sortie analogique | R | IMP | %IW | |
| CH_FLT | WORD | Défaut de la voie | R | STS | %MW | 2 |
| APPLI_FLT | BOOL | Valeur limite | R | STS | %MW | 2 |
| EXCH_STS | WORD | Mot d'échanges | R | SYS | %MW | 0 |
| EXCH_RPT | WORD | Compte-rendu d'échanges | R | SYS | %MW | 1 |
| CH_CMD | WORD | Commande de la voie | R/W | CMD | %MW | 3 |

Chaque tableau d'objet comprend une première colonne qui définit le nom de l'élément constituant également l'identifiant de l'élément de l'objet de type structuré. Cet identifiant est, par exemple, mnémonique, de sorte que le concepteur de l'application d'automatisme puisse identifier rapidement l'objet d'entrées-sorties correspondant à l'élément de l'objet de type structuré. Ainsi, CH_ERROR désigne une erreur de voie ("channel error") ; EXCH_STS désigne un mot d'échanges ("exchange status"); CH_FLT désigne un défaut de voie ("channel fault"); CH_CMD désigne une commande de la voie ("channel commande") ; EXCH_RPT désigne un compte-rendu d'échanges ("exchange report").

Une deuxième colonne du tableau d'objet comprend le type de l'élément, c'est-à-dire le type de la donnée ou de l'information correspondant à l'objet. Le type de l'élément permet, à l'aide d'un deuxième tableau, de déterminer, dans la troisième colonne, l'intervalle dans lequel les valeurs possibles de l'élément peuvent varier. Selon l'invention, le type de l'élément est l'un des types de données élémentaires (en anglais: Elementary Data Type, EDT) connus et utilisés dans le domaine de l'automatisme.

Le tableau N°2 ci-après rappelle les différents EDT :

| **Type de l'élément** | **Objet topologique** | **Intervalle de valeur** |
|---|---|---|
| EBOOL | %I - %Q | 0 (FAUX) - 1 (VRAI) |
| BOOL | %I@mod.ERR - bits extraits de mots | 0 (FAUX) - 1 (VRAI) |
| INT | %IW - %QW - %MW - %KW | [-32768, 32767] |
| DINT | %ID - %QD - %MD - %KD | [-2147483648, 2147483647] |
| UINT | %IW - %QW - %MW - %KW | [0, 65535] |
| UDINT | %ID - %QD - %MD - %KD | [0, 4294967295] |
| WORD | %IW - %QW - %MW - %KW | [0, 65535] |
| DWORD | %ID - %QD - %MD - %KD | [0, 4294967295] |
| REAL | %IF - %QF - %MF - %KF | Nombre réel |

| | | |
|---|---|---|
| EBOOL : booléen avec front et forçage | | |
| BOOL : booléen | | |
| INT : nombre entier | | |
| DINT : nombre double entier (D pour double) | | |
| UINT : nombre entier non signé (en anglais U pour "unsigned") | | |
| UDINT : nombre double entier non signé | | |
| WORD : mot binaire | | |
| DWORD : double mot binaire | | |
| REAL : nombre réel | | |

La deuxième colonne du tableau N°2 des types de données élémentaires définit pour chaque type d'élément la liste des objets topologiques compatibles avec le type de donnée élémentaire correspondant.

Une troisième colonne du tableau N°1 des éléments d'un objet de type structuré comprend un commentaire ou description (desc) définissant la fonction et/ou le contenu de l'élément.

Une quatrième colonne du tableau N°1 des éléments d'un objet de type structuré définit le type d'accès possible (Droit) sur cet élément. Par accès, il faut comprendre, soit une lecture (R) simple de l'élément, soit une lecture et une écriture (R/W) de l'élément. Selon le tableau ci-dessus le symbole R indique que seules des opérations de lecture réalisées par le programme sont possibles sur l'élément. Le symbole R/W indique que des opérations d'écriture et de lecture, réalisées par le programme, sont possibles sur l'élément.

Ainsi, à titre d'exemple, les éléments affectés à une zone mémoire correspondant à une voie d'échange périodique d'entrée %I, %IW ou à une zone mémoire d'une voie d'échange de configuration %KW sont des éléments accessibles uniquement en lecture, alors que les éléments affectés sur une zone mémoire d'une voie d'échange périodique de sortie %Q ou %QW sont des éléments accessibles en lecture et en écriture. Pour les éléments affectés sur une zone mémoire d'une voie d'échange à la demande du programme utilisateur %MW, les droits d'accès dépendent du type d'élément. Par affecté, il faut comprendre que l'on associe un élément physique des modules d'entrées-sorties à l'élément logique défini par le type.

Une cinquième colonne du tableau N°1 des éléments d'un objet de type structuré, comprend une caractérisation (EXCH) de la façon dont est transmise la donnée entre le module et le programme d'application. A titre d'exemple, cet échange peut être de six types différents. Chaque type d'échange est identifié de façon unique.
- IMP signifie que l'information est échangée implicitement,
- STS signifie que l'information est échangée par une commande spécifique de lecture (READ_STS),
- CMD signifie que l'information est échangée par une commande spécifique d'écriture (WRITE_CMD),
- PRM signifie que l'information est échangée par une commande spécifique de lecture, d'écriture, de sauvegarde ou de restauration (READ/WRITE/SAVE/RESTORE_PARAM),
- SYS signifie que l'information est gérée uniquement par le système, c'est-à-dire l'unité centrale de l'équipement d'automatisme,
- SPE signifie que l'information est échangée de façon spécifique.

Une sixième colonne du tableau N°1 des éléments d'un objet de type structuré, permet d'effectuer la topographie relative (en anglais : mapping) en foumissant l'adresse relative en mémoire de l'objet d'entrées-sorties correspondant à l'élément de l'objet de type structuré. Cette adresse est fournie par la documentation technique du constructeur du dispositif comprenant la voie ou le module d'entrées-sorties correspondant à l'élément de l'objet de type structuré. Le libellé ou la syntaxe de l'adresse relative écrite dans la sixième colonne dépend de l'interface langage choisie par le constructeur pour décrire chaque élément d'entrées-sorties.

Selon notre exemple, la sixième colonne du tableau N°1 des éléments d'un objet de type structuré est scindée en deux sous-colonnes. Une première sous-colonne (Objet) comprend un type de donnée qui caractérise l'objet d'entrées-sorties. Une deuxième sous-colonne (Rang) comprend le rang de l'objet.

Pour notre exemple, le tableau N°3 ci-après fournit l'interface langage qui peut être prévue par un constructeur pour décrire les objets d'une voie d'entrée analogique d'un module d'entrées-sorties de la famille analogique.

**Tableau N°3 :**

| **Objet** | **Rang** | **Bit** | **R/W** | **Nom** |
|---|---|---|---|---|
| %I | ERR | | R | Erreur de la voie |
| %IW | [0] | | R | Valeur de l'entrée analogique |
| %MW | 0 | | R | Mot d'échanges |
| %MW | 1 | | R | Compte-rendu d'échanges |
| %MW | 2 | | R | Défaut de la voie |
| %MW | 2 | X2 | R | Défaut externe : défaut du bomier |
| %MW | 2 | X3 | R | Défaut externe: alimentation électrique |
| %MW | 2 | X4 | R | Défaut interne : voie inutilisable |
| %MW | 2 | X5 | R | Défaut de configuration logicielle ou matérielle |
| %MW | 2 | X6 | R | Défaut du bus de communication |
| %MW | 2 | X7 | R | Valeur limite |
| %MW | 2 | X8 | R | Voie non prête |
| %MW | 2 | X9 | R | Erreur de compensation de soudure froide |
| %MW | 2 | X10 | R | Défaut de calibrage |
| %MW | 2 | X14 | R | Dépassement du seuil bas |
| %MW | 2 | X15 | R | Dépassement du seuil haut |
| %MW | 3 | | R/W | commande (calibrage forcé) |
| %MW | 4 | | R/W | Commande (valeur forcée) |
| %MW | 5 | | R/W | Commande (calibrage des seuils) |
| %MW | 6 | | R/W | Commande (calibrage de la source) |
| %MW | 7 | | R/W | Réglage (coefficient de filtrage |
| %MW | 8 | | R/W | Réglage (décalage de l'alignement) |
| %KW | [0] | | R | |
| %KW | 1 | | R | |
| %KW | 2 | | R | |

Un tableau d'interface langage similaire est associé à chaque voie de chaque module dans chacune des familles (TOR, COM, COUNT, etc.) et chacun de ces tableaux est défini par le constructeur.

Les informations contenues dans les trois premières colonnes du tableau N°3 concernent notamment l'adresse relative (objet, rang, bit) de chaque objet d'entrées-sorties de l'entrée analogique. Les informations contenues dans la quatrième colonne concernent des droits de lecture et d'écriture. Les quatrième et sixième colonnes du tableau N°1 sont renseignées par le concepteur de l'IODDT et font partie de la description de l'IODDT stockée dans un catalogue sur la station de programmation. Ainsi, le concepteur d'une application d'automatisme ne modifie pas le contenu de ces colonnes.

Ainsi, à titre d'exemple, l'élément "VALUE" de l'objet de type structuré "T_ANA_IN_STD" du tableau N°1 des éléments d'un objet de type structuré est défini comme étant la valeur de l'entrée analogique standard d'une entrée analogique d'un module d'entrées-sorties. Selon la troisième ligne du tableau N°3 d'interface langage, la valeur de l'entrée analogique est un objet de type %IW mot dans une zone mémoire d'une voie d'échange périodique en entrée de rang 0 et accessible uniquement en lecture. A partir de ces informations tirées de la documentation technique de l'entrée analogique du module d'entrées-sorties, le constructeur renseigne la ligne "VALUE" du tableau N°1 en saisissant, dans la quatrième colonne la lettre R par l'intermédiaire d'une interface graphique appropriée, pour signifier que l'élément "VALUE" de l'objet de type structuré "T_ANA_IN_STD" est accessible uniquement en écriture. De même, le constructeur renseigne la ligne "VALUE" du tableau N°1 des éléments d'un objet de type structuré, en saisissant dans la sixième colonne, "%IW" pour indiquer la zone mémoire et la taille mémoire de l'élément "VALUE" de l'objet de type structuré "T_ANA_IN_STD".

L'adresse topologique relative fournie dans la sixième colonne du tableau N°1 des éléments d'un objet de type structuré ne permet pas à l'application d'automatisme d'utiliser les objets d'entrées-sorties contenus dans le programme. En effet, les informations contenues dans la sixième colonne du tableau N°1 des éléments d'un objet de type structuré ne permettent pas de reconstituer l'adresse topologique complète de l'objet d'entrées-sorties. Comme expliqué dans le préambule de la description, la caractéristique principale de la programmation d'un équipement d'automatisme est que chaque élément ou variable utilisé dans un programme d'application d'automatisme est mémorisé dans une zone mémoire précise de l'unité centrale de l'équipement d'automatisme, cette zone mémoire étant définie en fonction de l'implantation physique des modules d'entrées-sorties. Ainsi, dans notre exemple, pour que l'adresse en zone mémoire de chaque élément puisse être complètement définie, il faut connaître l'implantation physique ou la topologie exacte du module d'entrées-sorties comportant une entrée analogique correspondant au type structuré "T_ANA_IN_STD".

Selon l'invention, la sixième colonne du tableau N°1 des éléments d'un objet de type structuré ne fournit qu'une information sur le type élémentaire (EDT) de l'objet et sur le rang de cet objet.

En construisant chaque tableau N°1 des éléments d'un objet de type structuré, pour chaque objet de type structuré, on comprend qu'il est possible de définir au préalable pour chaque voie d'un module d'entrées-sorties déterminé plusieurs objets de type structuré ou IODDT ainsi que leurs éléments associés indépendamment de l'implémentation physique du module d'entrées-sorties dans un équipement d'automatisme. De même, lorsque deux ou plusieurs modules d'entrées-sorties, éventuellement de type différent, comprennent une voie réalisant la même fonction métier, un seul type structuré ou IODDT est défini pour toutes les voies des modules réalisant la même fonction métier.

Dans notre exemple, l'objet de type structuré "T_ANA_IN_STD" est défini pour une entrée analogique standard d'un premier module. Si un deuxième module différent comprend une entrée analogique standard générant au moins tous les éléments de l'objet de type structuré défini par le tableau N°1, alors le même type structuré "T_ANA_IN_STD" pourra être utilisé lors de la mise en oeuvre du programme d'application pour le deuxième module. En effet, dans notre exemple, la différence entre le premier et le deuxième module concerne uniquement la topologie de chacun des modules. Or, comme expliqué précédemment, les objets de type structuré sont indépendants de leur topologie exacte.

Les tableaux N°1 des éléments d'un objet de type structuré sont créés par le constructeur des modules et fournis au concepteur du programme d'application, par exemple sous la forme d'un fichier mémorisé sur des moyens de mémorisation portables.

Les objets de type structuré, c'est-à-dire les tableaux (1.1, 1.2) des éléments d'un objet de type structuré correspondant chacun à un objet de type structuré, sont ensuite utilisés par le concepteur du programme d'application pour définir toutes les variables d'entrées-sorties que le concepteur souhaite utiliser. Cette définition consiste en fait à instancier un objet de type structuré défini dans le tableau N°1 avec une variable (100) d'entrées-sorties choisie par le concepteur du programme d'application. Cette déclaration est réalisée soit au début du programme, soit dans un quatrième tableau N°4 (4,fig.1) d'instanciation séparé.

Ce tableau N°4 (4) d'instanciation est mémorisé sur des moyens de mémorisation de la station de programmation, par exemple, de la forme suivante :

| | |
|---|---|
| Tank1 | T_ANA_IN_STD |
| Tank2 | T_ANA_IN_STD |

Une première colonne comprend une chaîne de caractères choisie par le concepteur pour identifier une variable. Une deuxième colonne comprend l'objet de type structuré associé à cette variable.

Le quatrième tableau d'instanciation peut être construit à l'aide d'une interface graphique de la station de programmation permettant d'éditer toutes les variables utilisées dans le programme.

En déclarant chaque variable (100) de cette façon, le concepteur associe également à chaque variable (100) symbolique d'entrées-sorties, la structure de données correspondant à un objet de type structuré (1.10), mémorisée dans le tableau N°1. Ainsi, dans notre exemple, pour désigner la valeur de l'entrée analogique de la variable d'entrées-sorties Tank1, le concepteur écrira simplement "Tank1.VALUE".

On constate ainsi que lors de l'écriture du programme d'application (10), le concepteur n'a plus besoin de connaître l'implantation physique exacte, c'est-à-dire la topologie ou la configuration des modules d'entrées-sorties. En effet, il utilise pour chaque variable du programme, une variable (100) symbolique (par exemple Tank1, Tank2) et un objet de type structuré représentant cette variable. Par conséquent, la programmation est indépendante de l'implantation matérielle de l'équipement d'automatisme. De même, le concepteur n'est plus tenu de connaître l'interface langage constructeur pour les modules qu'il utilise.

On comprend que l'utilisation de ces variables (100) symboliques et des objets de type structuré permet de réaliser une programmation d'un équipement d'automatisme avant de connaître avec précision l'adresse topologique des différents modules qu'il contient ou la configuration des modules d'entrées-sorties. De même, on comprend qu'une même programmation peut-être appliquée avantageusement à plusieurs équipements d'automatisme dans la mesure où ces équipements d'automatisme réalisent les mêmes fonctions métiers et dans la mesure où les modules d'entrées-sorties des équipements d'automatisme supportent les mêmes objets de types structurés.

De même, les variables (100) symboliques sont typées, par conséquent elles peuvent être utilisées comme paramètre d'un bloc fonction.

Pour que le programme écrit avec les variables (100) symboliques structurées puisse fonctionner sur un équipement d'automatisme, il faut procéder premièrement à une étape de configuration des variables symboliques d'entrées-sorties, et deuxièmement à une étape (50) de compilation du programme pour obtenir un programme d'application exécutable (30) qui puisse être exécuté par l'unité centrale de l'équipement d'automatisme.

L'étape de configuration des variables symboliques d'entrées-sorties consiste à définir l'implantation de chaque module dans l'équipement d'automatisme. Pour ce faire, le concepteur fournit uniquement la position de chaque module d'entrées-sorties, dont au moins une information est utilisée dans le programme d'application. Cette configuration est, par exemple, regroupée dans un cinquième tableau N°5 (5, fig.1) dit de configuration, mémorisé dans des moyens de mémorisation de la station de programmation dont une première colonne comprend le nom des variables d'entrées-sorties utilisées dans le programme et une deuxième colonne comprend :
- l'emplacement (N° rack) dans l'équipement d'automatisme, du module d'entrées-sorties correspondant à la variable d'entrées-sorties en définissant le numéro du panier,
- le numéro de l'emplacement (N° emplacement) dans le panier et
- le numéro de voie (N° voie) dans l'emplacement.

Le tableau N°5 de configuration ci-après donne un exemple de configuration.

| **Nom de la variable** | **N° rack** | **N° emplacement** | **N° voie** |
|---|---|---|---|
| Tank1 | 1 | 2 | 3 |
| Tank2 | 1 | 3 | 1 |

Lorsque la configuration des variables symboliques d'entrées-sorties est achevée, le concepteur de l'application d'automatisme choisit pour chaque variable symbolique d'entrées-sorties, un module d'entrées-sorties de référence commerciale déterminée. Cette étape est communément appelée étape de configuration des modules d'entrées-sorties. La configuration des modules d'entrées-sorties comprend également, de manière connue, l'affectation du module choisi à un emplacement physique dans un panier (rack). Cette affectation doit être conforme à la configuration de l'objet de type structuré effectuée précédemment de sorte que l'emplacement choisi pour l'objet de type structuré corresponde à l'emplacement de la voie du module d'entrées-sorties choisi.

Ainsi, l'emplacement du module d'entrées-sorties de référence commerciale déterminée doit correspondre à l'emplacement d'un objet de type structuré associé compatible avec le module d'entrées-sorties.

Lorsque le tableau N°5 de configuration est complété par le concepteur, par exemple, par l'intermédiaire de moyens d'interaction de la station de programmation, ce dernier déclenche sur la station de programmation, une étape d'interprétation (40) qui a pour but de générer l'adresse topologique complète de chaque variable (100) symbolique utilisée par le concepteur du programme, en vue de transformer le programme d'application (10) écrit avec des variables d'entrées-sorties de forme symbolique en un programme d'application (20) interprété pouvant être compilé pour être exécutable sur l'équipement d'automatisme considéré.

Pour ce faire, la station de programmation comprend des moyens d'interprétation qui ont accès aux moyens de mémorisation comprenant les tableaux N°1 (1.1, 1.2) des éléments d'un objet de type structuré, le tableau N°4 (4, fig.1) d'instanciation, et le tableau N°5 (5, fig.1) de configuration. Les moyens d'interprétation comprennent des moyens d'analyse du programme d'application (10) écrit avec les variables (100) symboliques d'entrées-sorties. Comme expliqué précédemment, une variable (100) comprend essentiellement deux champs (101, 102). Un premier champ (101) permet d'indiquer l'identité de la variable (100) symbolique manipulée. Le deuxième champ (102) permet d'identifier l'élément de l'objet de type structuré correspondant à cette variable.

Par conséquent, les moyens d'analyse détectent, dans un premier temps, la structure de la variable (100) symbolique. Ensuite, les moyens d'analyse déterminent, premièrement l'IODDT ou objet de type structuré associé à la variable, en comparant, dans une première étape (31), la chaîne de caractère du premier champ (101) de cette variable avec l'ensemble des noms de variable du tableau N°4 (4) d'instanciation. Lorsqu'une concordance est trouvée, les moyens d'analyse extraient du tableau N°4 d'instanciation l'identifiant du type structuré associé à la variable d'entrées-sorties, pour le mémoriser temporairement dans des moyens de mémorisation. Les moyens d'analyse déterminent, deuxièmement, l'emplacement du module associé à cette variable en comparant, dans une deuxième étape (32), la chaîne de caractère du premier champ (101) de cette variable avec l'ensemble des noms de variable du tableau N°5 (5) de configuration. Lorsqu'une concordance est trouvée, les moyens d'analyse extraient du tableau N°5 de configuration, dans une troisième étape (33), le N° du panier (rack), le N° d'emplacement dans ce rack et le N° de voie de cet emplacement pour le mémoriser temporairement dans des moyens de mémorisation.

Les moyens d'analyse déterminent enfin l'adresse exacte de l'objet d'entrées-sorties correspondant à la variable d'entrées-sorties. Pour ce faire, les moyens d'analyse comparent, dans une quatrième étape (34), le deuxième champ (102) de la variable d'entrées-sorties avec les noms des éléments de type structuré du tableau N°1 (1.1), correspondant au type structuré extrait et mémorisé après analyse du premier champ (101) de la variable d'entrées-sorties. Lorsqu'une concordance est trouvée dans le tableau N°1, les moyens d'analyse extraient, dans une cinquième étape (35), l'adresse relative et la complètent avec l'emplacement de module extrait et mémorisé, après analyse du premier champ (101) de la variable (100) symbolique d'entrées-sorties. L'adresse topologique (200) complète, ainsi reconstituée par les moyens d'analyse, est ensuite substituée à la variable (100) symbolique d'entrées-sorties dans le programme d'application (10). Lorsque tout le programme d'application a été ainsi modifié par les moyens d'analyse de la station de programmation, toutes les variables (100) symboliques structurées sont remplacées par l'adresse (200) topologique exacte sur l'équipement d'automatisme, de l'objet d'entrées-sorties correspondant.

Ensuite, le programme d'application (20) interprété peut être compilé (50) de façon à être transformé en un programme d'application (30) d'automatisme exécutable sur l'équipement d'automatisme considéré.

Lors de la compilation, c'est-à-dire lors de la génération du programme d'application d'automatisme exécutable sur l'équipement d'automatisme, une étape de contrôle doit être mise en oeuvre pour vérifier que pour chaque emplacement d'un objet de type structuré, la voie correspondante sur le module d'entrées-sorties déclaré par le concepteur à cet emplacement permet d'utiliser l'objet de type structuré associé à cet emplacement. Ainsi, dans notre exemple, si le concepteur a déclaré la variable "Tank1" correspondant au type structuré "T_ANA_IN_STD", sur la voie 3 de l'emplacement 2 du panier 1 du module, alors la référence commerciale du module d'entrées-sorties déclaré et configuré par le concepteur à l'emplacement 2 du panier 1 (rack) doit être la référence du module d'entrée analogique dont la voie 3 supporte l'objet de type structuré "T_ANA_IN_STD".

Pour ce faire, l'étape de contrôle consiste en une vérification, par des moyens de vérification de la station de programmation, que, pour chaque adresse topologique, l'objet de type structuré de la variable symbolique correspondant à l'adresse topologique appartient à la liste des objets de type structuré supportés par le module d'entrées-sorties choisi et configuré à la même adresse topologique. La liste des objets de type structuré supportés par un module d'entrées-sorties choisi est mémorisée sur la station de programmation, par exemple sous forme d'un catalogue dans un fichier.

Ainsi, dans notre exemple, les moyens de vérification scrutent la liste des objets de type structuré supportés par le module d'entrées-sorties choisi pour réaliser la variable "Tank1", pour rechercher si à l'emplacement 2 du panier 1, la voie 3 du module comprend dans la liste des objets de type structuré, l'objet de type structuré "T_ANA_IN_STD".

Après cette étape de vérification, le programme d'application exécutable est ensuite transféré de la station de programmation vers l'équipement d'automatisme sur lequel il doit fonctionner. Ce transfert peut être réalisé par l'intermédiaire de moyens de mémorisation portable adapté à l'équipement d'automatisme sur lequel la station de programmation a mémorisé le programme d'application exécutable. Dans une autre variante de réalisation, le programme d'application exécutable est transféré sur des moyens de mémorisation de l'équipement d'automatisme par l'intermédiaire d'une liaison de communication entre l'équipement d'automatisme et la station de programmation.

La figure 3 donne un exemple d'éditeur graphique de variables d'entrées-sorties d'un programme. Selon une variante de réalisation l'éditeur graphique comprend un écran (6) comprenant une pluralité de zones d'affichage et de zones de saisie organisées en tableau. Il faut comprendre qu'au début de la déclaration des variables d'entrées-sorties du programme, toutes les zones sont vierges, hormis une pluralité de zones constituant la première ligne du tableau (6). Une première colonne (61) est une colonne de saisie et permet au concepteur de saisir et de mémoriser le nom de chaque variable qu'il souhaite utiliser. Dans une première cellule (611) de la première colonne l'opérateur a saisi le nom "tank1" d'une première variable (100) symbolique et dans une deuxième cellule (612) de la première colonne (61) l'opérateur a saisi le nom "tank2" d'une deuxième variable (100) symbolique. Pour chaque variable saisie le concepteur choisit, dans une deuxième colonne (62) du tableau (6), l'objet de type structuré qu'il souhaite lui affecter. Pour ce faire, si le concepteur connaît le nom exact de l'objet de type structuré, alors il le saisit dans la zone (621, 622) de saisie de la deuxième colonne (62) associée à la cellule (611, 612) correspondante. Dans une autre variante, un menu déroulant (non représenté) peut s'afficher lorsque le concepteur pointe un curseur sur la zone (621, 622) de saisie de la deuxième colonne (62) associée à la cellule (611, 612) correspondante. Le menu déroulant comprend alors la liste de tous les IODDT disponibles. La sélection, puis la validation d'un IODDT de la liste provoque la fermeture du menu déroulant et l'affichage du nom de l'IODDT choisi dans la zone (621, 622) de saisie de la deuxième colonne (62) associée à la cellule (611, 612) correspondante. L'affichage, dans une troisième colonne (63) et dans la deuxième colonne (62), de tous les noms des éléments de l'IODDT choisi ainsi que le type de chaque élément est également réalisé par cette opération. Cet affichage est réalisé par une extraction, du tableau N°1 (1.1, fig.1) des éléments d'un objet de type structuré correspondant, des éléments correspondant à l'objet l'IODDT choisi par l'utilisateur. Le concepteur répète ensuite l'opération pour chaque variable qu'il a déclarée.

Comme expliqué précédemment, à l'issue de cette étape de déclaration, le concepteur peut alors écrire le programme en utilisant la variable (100) symbolique qu'il a déclarée.

L'étape de configuration des variables symboliques d'entrées-sorties définies précédemment consiste à renseigner la quatrième colonne (64) affichée par l'éditeur avec l'emplacement physique de chaque module correspondant à la variable (100) symbolique choisie. Pour ce faire, le concepteur saisit dans chaque cellule (641, 642) de la quatrième colonne (64) correspondant à chaque cellule (611, 612) de la première colonne (61) comprenant le nom d'une variable (100) symbolique, l'emplacement exact de la voie supportant la variable (100) symbolique. Les informations saisies dans les cellules (641, 642) de la quatrième colonne correspondent aux informations du tableau N°5 (5, fig.1) de configuration. Dès que le concepteur valide la saisie de l'emplacement exact de la voie supportant la variable (100) symbolique, un module de l'interface graphique détermine, pour chaque élément de l'objet de type structuré, l'adresse topologique complète et l'affiche dans les cellules (643) de la quatrième colonne correspondant à chaque élément de l'objet de type structuré. La détermination de l'adresse topologique complète en complétant l'adresse relative de l'élément de l'objet de type structuré mémorisé dans le tableau N°1 des éléments d'un objet de type structuré correspondant à l'objet de type structuré associé, avec l'emplacement exact de la voie saisi dans les cellules correspondantes de la quatrième colonne (64).

Une fois complété, le tableau (6) de l'interface graphique peut être exploité par les moyens d'interprétation pour remplacer dans le programme (10) chaque variable (100) symbolique programmée par son adresse topologique complète tel que décrit précédemment.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Procédé de programmation d'un programme d'application d'automatisme sur une station de programmation d'un équipement d'automatisme, comprenant :
- une étape de définition d'une pluralité d'objets (1.10, 1.20) de type structuré représentant chacun une voie d'entrées-sorties d'un module d'entrées-sorties de l'équipement d'automatisme, la définition de chaque type structuré comprenant au moins un élément (1.11) caractéristique correspondant à une information d'entrées-sorties échangée entre le module d'entrées-sorties et le programme d'application et pour chaque élément l'adresse topologique relative de l'information d'entrées-sorties,
- une étape d'écriture du programme d'application (10), en déclarant des variables (100) symboliques d'entrées-sorties du programme d'application (10) comme une instance d'un objet de type structuré préalablement défini,
- une étape de configuration des variables symboliques d'entrées-sorties comprenant une définition de l'emplacement physique de chaque module d'entrées-sorties de l'équipement d'automatisme associé aux variables (100) symboliques d'entrées-sorties du programme d'application,
- une étape (40) d'interprétation automatique du programme d'application en vue de son exécution sur l'équipement d'automatisme, comprenant une étape de remplacement dans le programme d'application (10), des variables (100) symboliques d'entrées-sorties par l'adresse (200) topologique complète de l'information d'entrées-sorties correspondante.

2. Procédé de programmation selon la revendication 1, **caractérisé en ce que** chaque variable (100) symbolique du programme comprend deux champs, un premier champ (101) est constitué d'une chaîne de caractères choisie par le concepteur du programme d'application et permettant de mettre en correspondance un objet de type structuré avec la variable (100) symbolique, un deuxième champ (102) est constitué d'une identification d'un élément de l'objet de type structuré associé à la variable (100) symbolique.

3. Procédé de programmation selon la revendication 1 ou 2, **caractérisé en ce que** l'étape de remplacement comprend :
- une étape (34) de recherche de l'adresse relative définie pour chaque élément du type structuré dans un tableau (1.1, 1.2) des éléments d'un objet de type structuré mémorisé sur la station de programmation,
- une étape (32) de recherche, dans un tableau de configuration, de l'emplacement physique déclaré pour chaque module associé par le concepteur aux variables (100) symboliques d'entrées-sorties du programme d'application,
- une étape (33, 35) de construction, par des moyens d'interprétation de la station de programmation, à partir de l'adresse relative et de l'emplacement physique trouvés, de l'adresse topologique exacte de chaque variable (100) symbolique du programme d'application.

4. Procédé de programmation selon la revendication 1 ou 2, **caractérisé en ce que** l'étape de définition des objets de type structuré comprend pour chaque objet de type structuré une étape de création puis de mémorisation sur des moyens de mémorisation portatifs, d'un tableau (1.1, 1.2) des éléments de l'objet de type structuré comprenant une première colonne contenant au moins une identification d'une donnée caractéristique de l'objet de type structuré, une deuxième colonne comprenant le type élémentaire de la donnée (EDT), une troisième colonne comprenant l'adresse relative de la donnée.

5. Procédé de programmation selon la revendication 3, **caractérisé en ce que** le tableau (1.1, 1.2) des éléments de l'objet de type structuré comprend une quatrième colonne comprenant une description de la donnée, une cinquième colonne comprenant les droits en lecture ou en écriture existants sur chaque donnée.

6. Procédé de programmation selon l'une des revendications 1 à 5, **caractérisé en ce que** le procédé comprend une étape de configuration des modules d'entrées-sorties comprenant une étape de sélection d'une référence commerciale d'un module d'entrées-sorties, ainsi que l'affectation du module d'entrées-sorties sélectionné à un emplacement physique déterminé, l'étape d'interprétation comprenant alors une étape de contrôle pour vérifier que le module d'entrées-sorties sélectionné à un emplacement physique déterminé est compatible avec l'objet de type structuré configuré au même emplacement physique.

7. Station de programmation d'un équipement d'automatisme comprenant des moyens de mémorisation, des moyens d'affichage et des moyens d'interaction avec un concepteur d'un programme d'application (10) d'automatisme, **caractérisée en ce que** la station de programmation comprend un éditeur de variable symbolique (100) pour générer un tableau (6) de configuration mémorisé sur les moyens de mémorisation, et **en ce que** la station de programmation comprend également une pluralité de tableaux (1.1, 1.2) des éléments d'objets de type structuré mémorisés sur les moyens de mémorisation, ainsi que des moyens d'interprétation d'un programme d'application (10) comprenant au moins une variable (100) symbolique définie par le concepteur, par l'intermédiaire de l'éditeur.

8. Station de programmation selon la revendication 7, **caractérisée en ce qu'**elle comprend des moyens de compilation du programme d'application interprété par les moyens d'interprétation pour transformer le programme d'application interprété en programme d'application d'automatisme exécutable sur un équipement d'automatisme.

9. Station de programmation selon la revendication 8, **caractérisée en ce qu'**elle comprend des moyens de transferts du programme d'application exécutable soit sur des moyens de mémorisation portables compatibles avec l'équipement d'automatisme, soit directement sur des moyens de mémorisation de l'équipement d'automatisme.

## Claims

1. Process for programming an automation application program on an automation equipment programming station comprising:
- a step to define a plurality of structured type objects (1.10, 1.20) each representing an input-output channel of an input-output module of the automation equipment, the definition of each structured type including at least one characteristic element (1.11) corresponding to input-output information exchanged between the input-output module and the application program, and the relative topological address of the input-output information for each element,
- a step to write an application program (10), declaring symbolic input-output variables (100) of the application program (10) as an instance of a previously defined structured type object,
- a step to configure symbolic input-output variables comprising a definition of the physical location of each input-output module of the automation equipment associated with the symbolic input-output variables (100) of the application program,
- a step (40) to automatically interpret the application program to execute it on the automation equipment, comprising a step to replace symbolic input-output variables (100) in the application program (10) by the complete topological address (200) of the corresponding input-output information.

2. Programming process according to claim 1, **characterized in that** each symbolic variable (100) of the program comprises two fields, a first field (101) composed of a character string chosen by the application program designer, so that a structured type object can be made to correspond with the symbolic variable (100), and a second field (102) composed of an identification of an element of the structured type object associated with the symbolic variable (100).

3. Programming process according to claim 1 or 2, **characterized in that** the replacement step comprises:
- a step (34) to search for the relative address defined for each structured type element in a table (1.1, 1.2) of elements of a structured type object stored on the programming station,
- a step (32) to search in a configuration table for the physical location declared for each module that the designer has associated with symbolic input-output variables (100) of the application program,
- a step (33, 35) to construct the exact topological address of each symbolic variable (100) of the application program, using interpretation means on the programming station, starting from the relative address and the physical location found.

4. Programming process according to claim 1 or 2, **characterized in that** the step to define structured type objects comprises a step to create a table (1.1, 1.2) of structured type object elements comprising a first column containing at least one identification of a characteristic data of the structured type object, a second column containing the elementary data type (EDT) and a third column containing the relative address of the data, and then memorizing this table in portable memory means, for each structured type object.

5. Programming process according to claim 3, **characterized in that** the table (1.1, 1.2) of structured object type elements comprises a fourth column containing a description of the data, and a fifth column containing read or write rights for each data.

6. Programming process according to any one of claims 1 to 5, **characterized in that** the process comprises a step to configure input-output modules comprising a step to select a commercial reference of an input-output module, and assignment of the selected input-output module to a determined physical location, the interpretation step then including a step to check that the input-output module selected at a determined physical location is compatible with the structured type object configured at the same physical location.

7. Programming station for programming automation equipment comprising means of memorization and display, and means of interaction with a designer of an automation application program (10), **characterized in that** the programming station comprises an editor of symbolic variables (100) to generate a configuration table (6) stored on the memory means, the programming station also includes several tables (1.1, 1.2) of structured type object elements stored on the memory means, and means of interpreting an application program (10) comprising at least one symbolic variable (100) defined by the designer using the editor.

8. Programming station according to claim 7, **characterized in that** it comprises means of compiling the application program interpreted by interpretation means to transform the interpreted application program into an automation application that can be executed on an automation equipment

9. Programming station according to claim 8, **characterized in that** it comprises means of transferring the executable automation application onto either portable memory means compatible with the automation equipment, or directly onto the memory means of the automation equipment.

## Patentansprüche

1. Verfahren zum Programmieren eines Prozesssteuerungsanwendungsprogramms auf einer Programmierstation einer Prozesssteuerungsausstattung, Folgendes umfassend:
- einen Schritt zur Definition einer Vielzahl von Objekten (1.10, 1.20) des strukturierten Typs, die jeweils einen Eingänge-Ausgänge-Kanal eines Eingänge-Ausgänge-Moduls der Prozesssteuerungsausstattung darstellen, wobei die Definition jedes strukturierten Typs mindestens ein charakteristisches Element (1.11) aufweist, das einer Eingänge-Ausgänge-Information entspricht, die zwischen dem Eingänge-Ausgänge-Modul und dem Anwendungsprogramm ausgetauscht wird, und für jedes Element die relative topologische Adresse der Eingänge-Ausgänge-Information,
- einen Schritt des Schreibens des Anwendungsprogramms (10), indem symbolische Eingänge-Ausgänge-Variablen (100) des Anwendungsprogramms (10) als eine Instanz eines vorab definierten Objekts des strukturierten Typs erklärt werden,
- einen Schritt der Konfiguration der symbolischen Eingänge-Ausgänge-Variablen, die eine Definition der physikalischen Lage jedes Eingänge-Ausgänge-Moduls der Prozesssteuerungsausstattung, zugewiesen zu den symbolischen Eingänge-Ausgänge-Variablen (100) des Anwendungsprogramms aufweisen,
- einen Schritt (40) der automatischen Auslegung des Anwendungsprogramms zu seiner Ausführung auf der Prozesssteuerungsausstattung, umfassend einen Schritt des Ersetzens in dem Anwendungsprogramm (10) der symbolischen Eingänge-Ausgänge-Variablen (100) durch die komplette topologische Adresse (200) der entsprechenden Eingänge-Ausgänge-Information.

2. Verfahren zum Programmieren nach Anspruch 1, **dadurch gekennzeichnet, dass** jede symbolische Variable (100) des Programms zwei Felder aufweist, ein erstes Feld (101) besteht aus einer Zeichenkette, die von dem Entwerfer des Anwendungsprogramms ausgewählt wird, und die es erlaubt, ein Objekt des strukturierten Typs mit der symbolischen Variablen (100) übereinstimmen zu lassen, ein zweites Feld (102) besteht aus einer Identifikation eines Elements des Objekts des strukturierten Typs, das mit der symbolischen Variablen (100) verbunden ist.

3. Verfahren zum Programmieren nach Anspruch 1 oder 2, **dadurch gekennzeichnet, dass** der Schritt des Ersetzens Folgendes umfasst:
- einen Schritt (34) des Suchens der relativen Adresse, die für jedes Element des strukturierten Typs definiert ist, in einer Tabelle (1.1, 1.2) der Elemente eines Objekts des strukturierten Typs, die auf der Programmierstation gespeichert ist,
- einen Schritt (32) des Suchens in einer Konfigurationstabelle der physikalischen Lage, die für jedes Modul erklärt ist, das von dem Entwerfer den symbolischen Eingänge-Ausgänge-Variablen (100) des Anwendungsprogramms zugewiesen ist,
- einen Schritt (33, 35) des Aufbauens durch Auslegungsmittel der Programmierstation ausgehend von der gefundenen relativen Adresse und der gefundenen physikalischen Lage der genauen topologischen Adresse für jede symbolische Variable (100) des Anwendungsprogramms.

4. Verfahren zum Programmieren nach Anspruch 1 oder 2, **dadurch gekennzeichnet, dass** der Schritt der Definition der Objekte des strukturierten Typs für jedes Objekt des strukturierten Typs einen Anlegungsschritt und dann Speicherschritt auf tragbaren Speichermitteln einer Tabelle (1.1, 1.2) der Elemente des Objekts des strukturierten Typs umfasst, die eine erste Spalte aufweist, die mindestens eine Identifikation einer charakteristischen Information des Objekts des strukturierten Typs enthält, wobei eine zweite Spalte den elementaren Typ der Information (EDT) enthält, wobei eine dritte Spalte die relative Adresse der Information enthält.

5. Verfahren zum Programmieren nach Anspruch 3, **dadurch gekennzeichnet, dass** die Tabelle (1.1, 1.2) der Elemente des Objekts des strukturierten Typs eine vierte Spalte umfasst, die eine Beschreibung der Information enthält, eine fünfte Spalte, die Lese- oder Schreibrechte, die für jede Information existieren, enthält.

6. Verfahren zum Programmieren nach einem der Ansprüche 1 bis 5, **dadurch gekennzeichnet, dass** das Verfahren einen Konfigurationsschritt der Eingänge-Ausgänge-Module umfasst, der einen Auswahlschritt einer Handelsreferenz eines Eingänge-Ausgänge-Moduls umfasst sowie die Zuweisung des ausgewählten Eingänge-Ausgänge-Moduls zu einer bestimmten physikalischen Lage, wobei der Auslegungsschritt daher einen Prüfschritt umfasst, um zu prüfen, dass das an einer bestimmten physikalischen Lage ausgewählte Eingänge-Ausgänge-Modul mit dem Objekt des strukturierten Typs kompatibel ist, das an der gleichen physikalischen Lage konfiguriert ist.

7. Programmierstation einer Prozesssteuerungsausstattung, die Speichermittel, Anzeigemittel und Mittel zur Wechselwirkung mit einem Entwerfer eines Prozesssteuerungsanwendungsprogramms (10) umfasst, **dadurch gekennzeichnet, dass** die Programmierstation einen Editor für symbolische Variable (100) umfasst, um eine Konfigurationstabelle (6) zu erzeugen, die auf den Speichermitteln gespeichert wird, und dass die Programmierstation ferner eine Vielzahl von Tabellen (1.1, 1.2) der Elemente von Objekten des strukturierten Typs enthält, die auf den Speichermitteln gespeichert sind, sowie Mittel zum Auslegen eines Anwendungsprogramms (10), das mindestens eine symbolische Variable (100) umfasst, die von dem Entwerfer über den Editor definiert wird.

8. Programmierstation nach Anspruch 7, **dadurch gekennzeichnet, dass** sie Mittel zum Kompilieren des von den Auslegungsmitteln ausgelegten Anwendungsprogramms aufweist, um das ausgelegte Anwendungsprogramm in ein Prozesssteuerungsanwendungsprogramm umzuwandeln, das auf einer Prozesssteuerungsausstattung ausführbar ist.

9. Programmierstation nach Anspruch 8, **dadurch gekennzeichnet, dass** sie Mittel für Transfers des ausführbaren Anwendungsprogramms entweder auf tragbaren Speichermitteln, die mit der Prozesssteuerungsausstattung kompatibel sind, oder direkt auf Speichermitteln der Prozesssteuerungsausstattung umfasst.
